# EUROPÄISCHE PATENTSCHRIFT

(11) **EP 0 591 758 B1**
(45) Veröffentlichungstag und Bekanntmachung des Hinweises auf die Patenterteilung: **13.08.1997**
(21) Anmeldenummer: 93115218.5
(22) Anmeldetag: 22.09.1993
(51) Int. Cl.: G01N 21/33, G01J 3/28, G02B 7/00

(54) **Mehrkomponenten-Analysengerät**
Multi-components analysing device
Appareil d'analyse pour plusieurs composants

(30) Priorität: 26.09.1992 DE 4232371
(43) Veröffentlichungstag der Anmeldung: 13.04.1994
(73) Patentinhaber: Forschungszentrum Karlsruhe GmbH, 76133 Karlsruhe (DE)
(72) Erfinder: Rinke, Günter, Dr., D-76356 Weingarten (DE); Hartig, Christian, D-76344 Eggenstein-Leopoldshaben (DE); Bertram, Carsten, D-30974 Wenningsen (DE); Robotta, Werner, Dr., D-30926 Seelze (DE)
(74) Vertreter: Gottlob, Peter, Dipl. Ing.

(56) Entgegenhaltungen:
- EP-A- 0 194 613
- EP-A- 0 241 684
- DE-C- 3 403 372
- FR-A- 2 415 291
- US-A- 4 775 794
- TECHNISCHES MESSEN TM, Bd.52, Nr.6, 1985, MUNCHEN DE Seiten 233 - 241 W. SCHAEFER ET AL.
- FEINWERKTECHNIK + MESSTECHNIK, Bd.96, Nr.1-2, 1988, MUENCHEN DE Seiten 13 - 17 M. MÄCHLER
- PATENT ABSTRACTS OF JAPAN vol. 9, no. 90 (P-350) (1813) 19. April 1985 & JP-A-59 218 936 (NIPPON DENKI K.K.) 10. Dezember 1984
- BETRIEBSTECHNIK, Bd.34, Nr.3, März 1993, GRAEFELFING DE Seiten 24 - 26, XP359746 'Das Multitalent'

## Beschreibung

Die Erfindung betrifft ein optisches Analysengerät zur gleichzeitigen Bestimmung von mehreren Gasen oder Flüssigkeiten, das auf der stoffspezifischen Strahlungsabsorption von Molekülen bei verschiedenen Wellenlängen beruht. Es enthält eine Lichtquelle mit breitbandigem Emissionsspektrum, eine Transferoptik zur Einkopplung der von der Lichtquelle ausgehenden Strahlung in eine Probenküvette, eine weitere Transferoptik zur Einkopplung der die Probenküvette verlassenden Strahlung in ein Spektrometer, welches aus einem Eintrittsspalt, einem konkaven Reflexionsgitter und einer Photodetektoreinrichtung besteht sowie einen Referenzzweig, bestehend aus Strahlteiler, Interferenzfilter und einem Photodetektor.

Spektrometer dieser Art erlauben die Messung des Absorptionsspektrums von Gas- oder Flüssigkeitsgemischen, woraus mittels des Lambert-Beerschen Gesetzes die Konzentrationen der in der Probenküvette enthaltenen Stoffe bestimmt werden können. Dazu wird speziell bei Mehrkomponenten-Meßgeräten im einfachsten Fall für jede chemische Komponente eine geeignete Wellenlänge zur Auswertung herangezogen. Bessere Verfahren nutzen dagegen das gesamte Spektrum für eine multivariante Berechnung aus.

Solche Analysengeräte werden sowohl in der Laboranalytik als auch für die Prozeßkontrolle von Gasen oder Flüssigkeiten eingesetzt. Beispiele für die Prozeßkontrolle sind im Fall von Gasen die Emissionsüberwachung der Schadstoffe von mit fossilen Brennstoffen betriebenen Kraftwerken. Dazu zählen z. B. Stickoxide, Schwefeldioxid und Ammoniak.

Aus der DE-OS 27 27 976 ist ein Photometer bekannt, das auf der nichtdispersiven Infrarotabsorption beruht und mit Interferenzfiltern arbeitet. Eine Mehrkomponentenbestimmung ist damit ohne weiteres allerdings nicht möglich.

Für den Einsatz in der Prozeßkontrolle dient auch das in der DE-OS 38 22 946 beschriebene Mehrkomponenten-Photometer, mit dem insbesondere Gase kontinuierlich gemessen werden können. Es arbeitet allerdings mit Interferenzfiltern und Gasküvetten und erfaßt somit nur einen Teil des Absorptionsspektrums der Stoffe.

In der US 4,730,922 wird ein Photometer beschrieben, das ein Spektrometer zur Wellenlängenselektion enthält. Es ist speziell für die Messung von Flüssigkeiten vorgesehen.

Aus der DE-PS 34 03 372 ist ferner ein Mehrkanal-Prozeß-Spektrometer bekannt, das ebenfalls dispersiv arbeitet. Es enthält allerdings zahlreiche mechanisch bewegte Teile.

In der DE-OS 36 38 787 ist ein mehrkanaliges Gasanalysengerät beschrieben, das auch nicht ohne mechanische Elemente auskommt.

Zur direkten Bestimmung der Schadgase in einem Kamin wird in der DE-OS 36 24 567 ein spektralanalytisches Meßgerät beschrieben, das im ultravioletten Spektralbereich arbeitet und ebenfalls ein Spektrometer mit einer Detektorzeile enthält. Es verwendet allerdings eine relativ kurzlebige Deuteriumlampe als Lichtquelle und darüber hinaus zahlreiche mechanisch bewegte Bauteile.

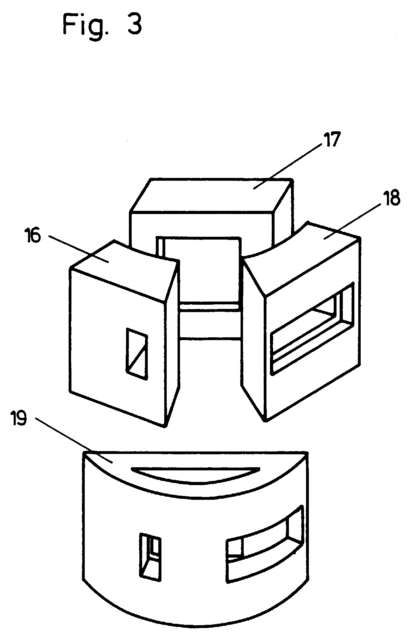

In der US 4,775,794 wird als Bestandteil eines Apparates, der zur Durchführung eines lichtabsorbierneden Verfahrens eingesetzt wird, eine Lichtquelle beschrieben, die direkt über dem oberen Ende eines Quarzstabes angebracht ist (siehe Figur 3 darin).

In "Technisches Messen" tm, 52.Jahrgang, Heft 6/1985, Seiten 233 bis 241, handelt W. Schaefer et al. den damaligen Stand der spektroskopischen Gas- und Flüssigkeits-Prozeßmeßtechnik ab. In dem Abschnitt 3.3, Dispersive Verfahren, wird das zugehörige Bild 5 eines dispersiv arbeitenden Rauchgasanlysators beschrieben. Bestandteil des Analysators ist ein Polychromator mit Detektorzeilen, mit dem das aufgespaltene Licht in seiner Intensität detektiert wird.

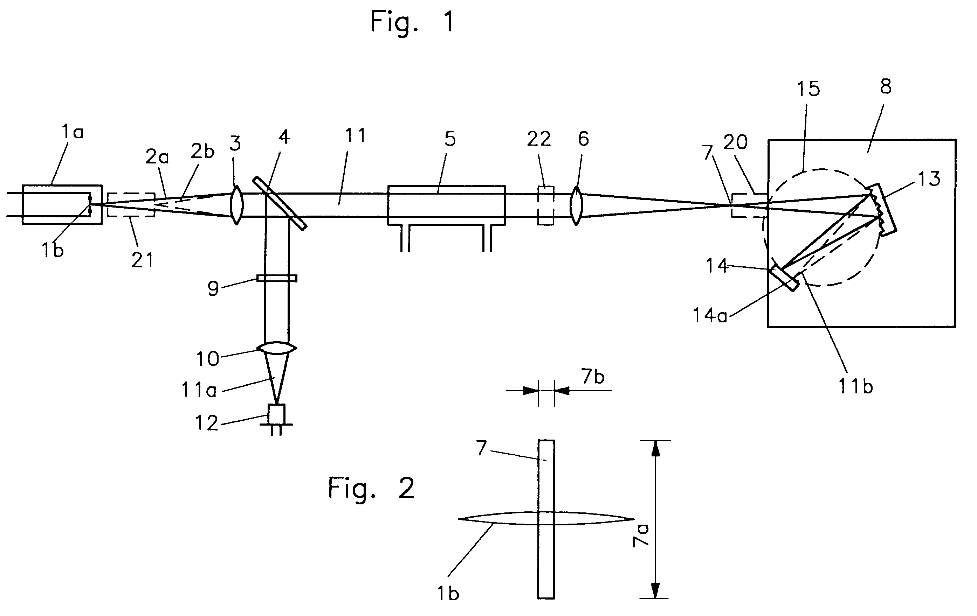

Schließlich wird in der FR-A 2 415 291 ein Analysengerät beschrieben, das zur Bestimmung der Konzentration von Gasen oder Flüssigkeiten mittels Absorptionsspektroskopie dient. Figur 1 der Schrift zeigt eine gepulste Lichtquelle, eine auf eine Probenküvette abbildende Optik und einen Gitter-Monochromator. Im Strahlengang des Spektrometers ist ein Strahlteiler, der den von einer Blitzlampe ausgesandten Strahl in einen Referenz- und Meßstrahl aufteilt. Zur Nivellierung der Intensität über den Strahlquerschnitt sitzt im Strahlengang ein Quarzstab. Um die Wanderbewegungen des Blitzlichtbogens in seinem Einfluß auf die spätere spektrale Zerlegung zu minimisieren, ist der Eintrittsspalt um 90° gegen die Lichtbogenachse verdreht.

Die erwähnten Systeme weisen verschiedene Nachteile auf:
- So wird nicht immer das gesamte Absorptionsspektrum, sondern nur eine bestimmte Wellenlänge ausgewählt. Dies führt insbesondere bei komplexen Mischungen zu Überlappungen und somit Querempfindlichkeiten.
- Geräte, die mittels eines Spektrometers das gesamte Absorptionsspektrum eines Stoffes erfassen, sind wegen ihrer mechanischen Instabilität oder der begrenzten Lebensdauer der UV-Lichtquelle meist nur für Laboranwendungen geeignet. - Bei dem zuletzt erwähnten Spektrometer (FR-A 2 415 291) ergibt sich das Problem, daß bei Bewegungen des Lichtbogens der Strahlungsquelle nicht immer alle Teile des Bogenplasmas in den Lichtleitereintritt eingekoppelt werden und daß dadurch abwechselnd Licht aus unterschiedlichen Temperaturzonen des Lichtbogens in die Spektralapparatur gelangt. Dies führt zur Verfälschung des gemessenen Absorptionsspektrums.

Der Erfindung liegt die Aufgabe zugrunde, ein Analysegerät bereitzustellen, bei dem der Akzeptanzlichtkegel des Lichtleiters so groß ist, daß der Lichtbogen auch unter Berücksichtigung seiner Bewegungen immer vollständig in den Lichtleiter eingekoppelt werden kann.

Diese Aufgabe wird durch einen Analysator nach dem Oberbegriff und den kennzeichnenden Merkmalen des Anspruchs 1 gelöst. Für die Strahlqualität hat sich als wichtig erwiesen, daß keine abbildende Optik zwischen Lichtquelle und Lichtleitereintrittsfläche angebracht ist und sich die Lichtleitereintrittsfläche direkt hinter der Strahlungsquelle befindet.

Für die zuverlässige Signalverarbeitung und Signaldiskriminierung ist eine schnelle Elektronik, die an den Referenzdetektor und die Detektorzeile angeschlossenen ist, unerläßlich. Messungen mit starken Intensitätsfluktuationen der gepulsten Lichtquelle werden durch sie eliminiert. Hierzu wird der Quotient zweier schnell aufeinanderfolgender Lichtblitze aus den zugehörigen Meßspektren ermittelt und solche Lichtblitze ignoriert, bei denen dieser Quotient bei mindestens einer Wellenlänge eine obere Schwelle übersteigt oder eine untere Schwelle unterschreitet.

In den Unteransprüchen 2 bis 14 sind vorteilhafte Ausgestaltungen des Analysators gekennzeichnet. So betreffen die Ansprüche 2 bis 6 optische Maßnahmen zur Verbesserung der Strahlqualität. In den Ansprüchen 7 bis 9 sind Maßnahmen zur spektralen Verbesserung der Apparatur gekennzeichnet. Die Ansprüche 10 und 11 kennzeichnen Schutzmaßnahmen zur Erhaltung der Strahlqualität. Die Ansprüche 11 bis 14 betreffen konstruktive Maßnahmen für den zuverlässigen Aufbau des Analysators.

Der Analysator wird in folgendem anhand der Figuren 1 bis 3 näher erläutert.

Es zeigen:
Fig. 1: Schematische Darstellung des Gesamtsystems,
Fig. 2: Abbildung des Lichtbogens auf den Eintrittsspalt,
Fig. 3: Aufbau des Spektrometers.

In Fig. 1 ist ein solches als Prototyp gebautes Gerät dargestellt. Als Lichtquelle la wird eine Xenon-Blitzlampe verwendet, die ein breitbandiges Emissionsspektrum vom Ultravioletten bis zum nahen Infraroten aufweist. Die Lebensdauer einer solchen Lichtquelle hängt neben der Ausführungsart von der Blitzenergie und der Blitzfrequenz (Repetierrate) ab. Hier hat es sich als vorteilhaft erwiesen, Blitzenergien von ca. 100 mJ und Blitzfrequenzen um 2 Hz zu verwenden. Damit ist eine Lebensdauer von mehreren Jahren erreichbar.

Um Fertigungstoleranzen der Lichtquellenelektrodenanordnung zu kompensieren, ist es zweckmäßig, die Lichtquelle in der Ebene senkrecht zur optischen Achse justierbar einzubauen. Weiterhin sorgt eine Verschiebungsmöglichkeit in Achsrichtung für die Einstellung des Parallelstrahlungsbündels.

Die Strahlung 2a dieser Lichtquelle la wird von einer ersten Linse 3 zu einem nahezu parallelen Strahl 11 kollimiert und gelangt über einen Strahlteiler 4, eine Probenküvette 5 und eine Linse 6 auf den Eintrittsspalt 7 des Spektrometers 8. Die Probenküvette 5 wird für den Einsatz in der Prozeßmeßtechnik als Durchflußküvette mit gesonderter Thermostatisierung ausgeführt.

Zur Kompensation von Intensitätsfluktuationen der Lichtquelle la wird über den Strahlteiler 4, das Interferenzfilter 9 und die Linse 10 ein Referenzstrahl lla auf einen Photodetektor 12 fokussiert.

Es hat sich gezeigt, daß beim ständigen Betrieb der Xenon-Blitzlampe durch deren ultraviolette Strahlung Ozon gebildet wird, welches eine charakteristische Absorption mit Maximum bei 260 nm hat, was sich störend auf die Basislinie auswirkt. Zur Eliminierung dieses Effekts werden alle Zwischenräume im Strahlengang, außer der Probenküvette 5, mit einem Schutzgas, z. B. gefilterter Luft, Stickstoff oder Edelgas gespült. Für eine optimale Wirkung ist es günstig, die Zwischenräume nacheinander zu spülen, wobei zuerst die Zwischenräume, die von der Lichtquelle la am weitesten entfernt sind, gespült werden und die der Lichtquelle la am nächsten liegenden Räume als letzte. Dadurch wird erreicht, daß das Ozon mit der größten Konzentration (in Lichtquellennähe) sofort aus dem Strahlengang entfernt und nicht durch alle Zwischenräume verschleppt wird. Eine alternative Möglichkeit besteht darin, alle Zwischenräume gleichzeitig zu spülen.

Fig. 2 zeigt die bei diesem Ausführungsbeispiel wichtige Verdrehung des Lichtbogens 1b der Xenon-Blitzlampe und dem Eintrittsspalt 7 um 90°. Der Eintrittsspalt 7 hat hier eine Höhe 7a von 2 mm und eine Breite 7b von 0,025 mm, der Lichtbogen 1b ist ungefähr 1,5 mm lang und 0,2 mm dick. Die sonst übliche, parallele Abbildung einer stabförmigen Lichtquelle auf den Eintrittsspalt hat dagegen einen Nachteil: geringfügige Lichtbogenbewegungen bewirken, daß unterschiedlich heiße Teile des Lichtbogenplasmas in das Spektrometer 8 eingekoppelt werden. Da jeder Temperatur aber einer anderen spektrale Emissionsverteilung entspricht, führt dies zu spektralen Schwankungen der Basislinie. Bei verdrehter Anordnung um 90° wirken sich Lichtbogenbewegungen dagegen wesentlich geringer aus, da die Temperaturverteilung des Lichtbogens 1b in axialer Richtung nahezu konstant ist, während sie radial stark, meist parabolisch variiert.

In Fig. 1 ist weiter das Spektrometer 8 dargestellt. Es besteht aus dem Eintrittsspalt 7, dem konkaven Reflexionsgitter 13 und der Detektorzeile 14, die auf einem Rowland-Kreis 15 angeordnet ist. Das in das Spektrometer eintretende Licht wird dabei in üblicher Weise von dem konkaven Reflexionsgitter 13 gesammelt, in seine spektralen Anteile zerlegt und auf die Detektorzeile 14 abgebildet. In diesem Ausführungsbeispiel wird ein Silizium-Photodioden-Array als Detektorzeile 14 mit 512 Elementen verwendet, das einen Spektralbereich von 200 nm bis 350 nm erfaßt.

Eine andere Art der Kompensation von Intensitätsfluktuationen wird durch Verwendung des im Spektrometer 8 erzeugten Teilstrahls, des Referenzstrahls 11b, erreicht. Dieser Referenzstrahl 11b ist Bestandteil des gesamten, am konkaven Refelexionsgitter 13 spektral zerlegten Strahls 11.

Die im folgenden mit Basislinie bezeichnete Kurve errechnet sich aus dem Quotienten des pro Blitz aufgenommenen Spektrums der Lichtquelle la und einem im Steuerungsrechner hinterlegten Referenzspektrum dieser Lichtquelle 1a, wobei jedes gemessene Spektrum durch den Wert des Photodetektors 12 oder des gewählten Elementes 14a dividiert wird. Ein möglicher, geringer Dunkelstrom der Detektorzeile 14 kann bei diesem Gerät mit gepulster Lichtquelle sehr einfach dadurch korrigiert werden, daß die Detektorzeile 14 zwischen zwei Blitzen ausgelesen wird und diese Werte von den Werten mit Blitz subtrahiert werden. Zur Messung des Referenzspektrums wird die Probenküvette 5 mit einer Substanz gefüllt, die im gesamten erfaßbaren Spektralbereich nicht absorbiert, z. B. Wasser für Flüssigkeiten, Luft, Stickstoff oder Edelgase für Gase. Die gemäß obiger Vorschrift berechnete Basislinie ist eine Gerade (100 %-Kurve), wenn während der Messung ebenfalls keine absorbierfähigen Substanzen in der Probenkütte 5 enthalten sind.

Fig. 3 zeigt den Aufbau des Spektrometers noch etwas deutlicher. Auf den Bauteilformkörpern 16, 17 und 18 sind der Eintrittsspalt 7, das konkave Reflexionsgitter 13 und die Detektorzeile 14 dauerhaft fixiert. Die Bauteilformkörper 16, 17 und 18 werden mitsamt den an ihnen dauerhaft fixierten optischen Elementen 7, 13 und 14 an einen Justierkörper 19 herangeführt und dort dann in eine endgültige Lage justiert. Sobald die Bauteilformkörper 16, 17 und 18 in der idealen Justierposition sind, werden sie mit dem Justierkörper 19 dauerhaft verbunden, z. B. mit einem Kleber oder dergleichen. Diese Anordnung hat den Vorteil, daß aufgrund der Formgebung des Justierkörpers 19 die Justierung nicht in allen drei Koordinaten des Raumes erfolgen muß, sondern bereits auf die entscheidende Dimension eingeschränkt ist, hier auf den Umfang des Justierkörpers 19, der an die Form der Brennlinie des Gitters angelehnt ist.

Dieser Sachverhalt wird im folgenden kurz erläutert: Das hier verwendete konkave Reflexionsgitter 13 ist ein sogenanntes Flat-Field-Gitter, das ein Spektrum in einer Ebene erzeugt und so für Detektorzeilen geeignet ist. Bei dieser neuen Art von Gitter liegen Eintrittsspalt, Gitter und Spektrum nur noch näherungsweise auf dem sogenannten Rowland-Kreis. Das Spektrum kann je nach Herstellung verschiedene Kurvenformen annehmen. Der hier eingesetze Gittertyp weist eine solche Brennlinienform auf, die im Bereich des gewünschten Spektralbereiches durch einen Kreis angenähert werden kann, dessen Mittelpunkt zentral im Gitter liegt. Andere Gittertypen mit ihren unterschiedlichen Brennlinienformen können ebenfalls verwendet werden, wenn der Bauteilformkörper 19 daran entsprechend angelehnt ist.

Eine weitere Maßnahme zur Verbesserung der Strahlqualität ist der Einbau eines Lichtleiters 20 im Strahlengang nach der Linse 6. Die Linse 6 hat jetzt die Aufgabe, das durch die Probenküvette 5 transmittierte Licht auf den Eingang des Lichtleiters 20 zu fokussieren. Der Ausgang dieses Lichtleiters 20 wird unmittelbar an den Eintrittsspalt 7 herangeführt. Durch diese Kombination werden restliche spektrale Schwankungen der Basislinie weiter reduziert. Bei der Variante in Fig. 1 führen dagegen insbesondere die Bogenbewegungen in Richtung der optischen Achse zu unterschiedlich starker Fokussierung im genutzten Wellenlängenbereich und somit geringen spektralen Schwankungen der Basislinie.

Am Analysator ist die Art der Einkopplung des Lichtes in die Probenküvette 5 entscheidend. Die Strahlung der Lichtquelle la wird direkt, ohne jede abbildende Optik, in den Lichtleiter 21 eingekoppelt. Als vorteilhaft hat sich ein massiver Quarzstab mit 3 mm Durchmesser und 10 cm Länge erwiesen, der bis an das Fenster der Lichtquelle 1a geschoben wird. Zum Schutz vor Verunreinigungen und Feuchtigkeit wird er hermetisch durch ein Schutzrohr abgeschlossen, in dem sich ein Schutzgas, z. B. gefilterte Luft, Stickstoff, Edelgase oder Vakuum befindet. Das am Ende des Lichtleiters 21 austretende Strahlungsbündel 2b wird dann von der Linse 3 zu einem nahezu parallelen Strahl 11 kollimiert und gelangt über den Strahlteiler 4, die Probenküvette 5 und die Linse 6 auf den Eintrittsspalt 7 des Spektrometers 8.

Diese Art der Einkopplung hat mehrere Vorteile. Der Akzeptanzkegel des Lichtleiters 21 ist so groß, daß das vom Lichtbogen 1b emittierte Licht problemlos vollständig eingekoppelt werden kann. Sogar bei allen Bogenbewegungen ist gewährleistet, daß alles Licht, das in den durch Lichtleitereintrittsfläche und Abstand Lichtquelle-Lichtleitereintritt definierten Raumwinkel emittiert wird, in den Lichtleiter 21 gelangt. Der verwendete Lichtleiter 21 muß eine bestimmte Länge aufweisen, die vom seinem Durchmesser und der Bearbeitung der Mantel- und Stirnflächen abhängig ist. Dadurch wird erreicht, daß sich die Lichtanteile von unterschiedlich heißen und somit spektral verschiedenen abstrahlenden Bogenteilen im Lichtleiter vermischen. Wesentlich ist, daß die Austrittsfläche des Lichtleiters 21 starr im Raum steht, unabhängig von Bogenschwankungen ist und im Gegensatz zum Bogen 1b über die gesamte Fläche spektral einheitlich leuchtet. Bei dieser Anordnung werden keinerlei spektrale Schwankungen der Basislinie festgestellt.

Im Gegensatz dazu führt eine Linse zwischen Lichtquelle und Lichtleitereintritt bei Bogenbewegungen dazu, daß nicht immer alle Teile des vom Bogenplasma emittierten Lichts eingekoppelt werden. Die Folgen sind spektrale Schwankungen der Basislinie.

Eine weitere vorteilhafte Weiterbildung besteht darin, irgendwo in den Strahlengang zwischen Lichtquelle 1a und Detektorzeile 14 das optisches Filter 22 einzubauen, das eine solche spektrale Transmission zeigt, daß die spektrale Emissionsverteilung der Lichtquelle eingeebnet wird. Dies ist insbesondere bei der in obigem Ausführungsbeispiel (Fig. 1) verwendeten Xenon-Blitzlampe sinnvoll, da diese neben der kontinuierlichen Strahlung auch einige Linien emittiert. Wird die Detektorzeile 14 so ausgeleuchtet, daß die stärkste Linie das entsprechende Element dieser Zeile noch nicht sättigt, so gibt es andere Spektralbereiche mit geringer Intensität, an denen das Signal-Rausch-Verhältnis schlechter wird. Das Filter 22 sollte vorzugsweise im parallelen Strahlengang angeordnet sein. Besonders günstig ist die Position zwischen der Probenküvette 5 und der Linse 6 in unmittelbare Nähe der Linse 6, da hier die Thermostatisierung des Spektrometers 8 eine gute Langzeitkonstanz gewährleistet.

Bei den Versuchen hat sich weiter gezeigt, daß manche Blitzlampen gelegentlich Lichtimpulse liefern, die vom Mittelwert der emittierten Intensität stark abweichen. Um auch solche (schlechten) Lichtquellen einsetzen zu können, müssen diese störenden Lichtblitze erkannt werden. Dazu wird im einfachsten Fall ständig die Lichtintensität eines Blitzes mit dem vorhergehenden verglichen. Weicht der daraus berechnete Quotient um mehr als ein Soll-Wert nach oben oder unten ab, dann wird dieser Blitz für die weitere Auswertung ignoriert. Die Quotientenberechnung kann bei einer oder mehreren Wellenlängen vorgenommen werden. Statt zweier Blitze können natürlich auch mehrere, aufeinander folgende Blitze ausgewertet werden. Dieses Verfahren funktioniert dann, wenn die Zeit zwischen zwei Blitzen kleiner ist als die Zeit zum Durchströmen der Probenküvette 5, was hier der Fall ist.

Ein plötzlicher Konzentrationsspung einer chemischen Komponente wird dann nicht mit einem Ausrutscher der Blitzlampe verwechselt.

Um einen breiten Einsatz des Analysengeräts zu erreichen, wird es modular aufgebaut, so daß insbesondere ein schneller Wechsel zwischen den diversen Gas- und Flüssigkeitsküvetten ermöglicht wird. Das wird durch eine Probenküvettenhalterung konstanter Länge erreicht, in die unterschiedlich lange Probenküvetten 5 eingesetzt werden. Sinnvollerweise werden zwei unterschiedliche Halterungen verwendet, die eine für die kürzeren Flüssigkeitsküvetten und die andere für die längeren Gasküvetten. Um Umgebungseinflüsse völlig auszuschalten, werden die Xenon-Lichtquelle und das Spektrometer thermostatisiert, die Probenküvette je nach Anwendungsfall.

### Bezugszeichen:

- 1a: Lichtquelle
- 1b: Lichtbogen
- 2a: Strahlung der Lichtquelle ohne Lichtleiter
- 2b: Strahlung der Lichtquelle mit Lichtleiter
- 3: Linse
- 4: Strahlteiler
- 5: Probenküvette
- 6: Linse
- 7: Eintrittsspalt
- 7a: Eintrittsspalt (Höhe)
- 7b: Eintrittsspalt (Breite)
- 8: Spektrometer
- 9: Interferenzfilter
- 10: Linse
- 11: Parallelstrahl
- 11a: Referenzstrahl
- 11b: Referenzstrahl
- 12: Photodetektor
- 13: Konkaves Reflexionsgitter
- 14: Photodetektoreinrichtung, Detektorzeile
- 14a: Detektorelement
- 15: Rowland-Kreis
- 16: Bauteilformkörper für Eintrittsspalt (7)
- 17: Bauteilformkörper für das konkave Reflexionsgitter (13)
- 18: Bauteilformkörper für Detektorzeile (14)
- 19: Justierkörper
- 20: Lichtleiter
- 21: Lichtleiter
- 22: Optisches Filter

## Patentansprüche

1. Absorptionsspektroskopisches Analysengerät mit Meß- und Referenzstrahlen für Gase oder Flüssigkeiten, bestehend aus:
einer Lichtquelle (1a),
Mittel zum gepulsten Betrieb der Lichtquelle (1a),
einer Probenküvette (5),
einem stabförmigen Lichtleiter (21) mit nachfolgender Linse (3) zur Kollimierung des Lichtstrahls auf die Probenküvette (5),
einem Gitterspektrometer (8) mit Eintrittsspalt (7), das aus einem Gittermonochromator (13) und einer Photodetektoreinrichtung (14) besteht,
einer Vorrichtung zur Fokussierung des aus der Probenküvette (5) austretenden Lichts auf den Eintrittsspalt (7) des Gitterspektrometers (8),
dadurch gekennzeichnet, daß
der Lichtleiter (21) ohne vorgeschaltete, abbildende Optik mit seiner Eintrittsfläche direkt hinter der Strahlungsquelle (1a) angebracht ist und die Photodetektoreinrichtung aus einer Detektorzeile (14) besteht, welche zur Detektion der Meßstrahlen (11) an eine Einrichtung mit schneller Elektronik angeschlossen ist, mit der starke Intensitätsfluktuationen der gepulsten Lichtquelle (1a) erkannt und eliminiert werden, indem bei mindestens zwei schnell aufeinander folgenden Lichtblitzen der Quotient aus den zugehörigen Meßspektren ermittelt wird und solche Blitze ignoriert werden, bei denen dieser Quotient bei mindestens einer Wellenlänge eine obere Schwelle übersteigt oder eine untere Schwelle unterschreitet.

2. Analysengerät nach Anspruch 1,
dadurch gekennzeichnet, daß
die Lichtquelle (1a) eine stabförmige Lichtemission wie z. B. der Lichtbogen (1b) einer Xenon-Blitzlampe hat.

3. Analysengerät nach Anspruch 2,
dadurch gekennzeichnet, daß
der Lichtleiter (21) ein massiver Quarzstab ist.

4. Analysengerät nach Anspruch 3,
dadurch gekennzeichnet, daß
ein Strahlteiler (4) im Strahlengang nach der Linse (3) den kollimierten Strahl in einen Teilstrahl (11) durch die Probenküvette (5) und einen zweiten Teilstrahl (11a), den Referenzstrahl (11a), zerlegt, und letzterer ein Interferenzfilter (9) und eine auf einen Photodetektor (12) fokussierende Linse im Strahlengang hat.

5. Analysengerät nach Anspruch 4,
dadurch gekennzeichnet, daß
im Strahlgang nach der Probenküvette (5) eine konvexe Linse (6) und danach einen Lichtleiter (20) ist, die Linse (6) das Licht auf den Lichtleitereingang fokussiert und der Lichtleiterrausgang unmittelbar an den Eintrittsspalt (7) des Spektrometers (8) stößt.

6. Analysengerät nach Anspruch 5,
dadurch gekennzeichnet, daß
die Längsrichtung des Lichtbogens (1b) und die Höhe (7a) des Eintrittsspalts (7) um 90° gegeneinander verdreht sind.

7. Analysengerät nach Anspruch 6,
dadurch gekennzeichnet, daß
der Eintrittsspalt (7) und die Detektorzeile (14) des Gitterspektrometers (8) verschiebbar auf einem Kreis, dem Rowland-Kreis (15), angeordnet sind, der sich an die Form der Gitterbrennlinie anschmiegt.

8. Analysengerät nach Anspruch 7,
dadurch gekennzeichnet, daß
ein vorgegebener spektraler Teilstrahl, der Referenzstrahl (11b), des am Gittermonochromator (13) reflektierten Strahls (11) auf ein spektral vorgesehenes Detektorelement (14a) aus der Detektorzeile (14) fällt.

9. Analysengerät nach Anspruch 8,
dadurch gekennzeichnet, daß
im Strahlengang zwischen der Lichtquelle (1a) und der Detektorzeile (14) ein optisches Filter (22) angeordnet ist, welches eine solche spektrale Transmission aufweist, daß die spektrale Emissionsverteilung der Lichtquelle (1a) eingeebnet wird.

10. Analysengerät nach Anspruch 9,
dadurch gekennzeichnet, daß
der Quarzstab (21) durch ein Überrohr hermetisch abgeschlossen ist und sich zwischen Quarzstab (21) und Überrohr ein Schutzgas wie z. B. gefilterte Luft befindet oder ein Vakuum besteht.

11. Analysengerät nach Anspruch 10,
dadurch gekennzeichnet, daß
die Schutzgaszu- und -abfuhr derart angeordnet ist, daß die einzelnen Zwischenräume bei Flutung zeitlich nacheinander durchströmt werden, wobei der der Lichtquelle (1a) am weitesten entfernt liegende Zwischenraum zuerst und der der Lichtquelle (1a) am nächsten liegende Zwischenraum zuletzt gespült wird.

12. Analysengerät nach 11,
dadurch gekennzeichnet, daß
- der Eintrittsspalt (7), das konkave Reflexionsgitter (13) und die Detektorzeile (14) jeweils auf einem Bauteilkörper (16, 17, 18) dauerhaft fixiert sind,
- die Bauteilkörper (16, 17, 18) selbst dauerhaft auf einer planen Platte fixiert sind, nachdem sie zuvor an einen Justierkörper (19) herangeführt und dann in endgültiger Lage justiert wurden.

13. Analysengerät nach Anspruch 12,
dadurch gekennzeichnet, daß
eine Halterung mit konstanter Länge vorgesehen ist, in welcher Probenküvetten (5) unterschiedlicher Länge austauschbar einsetzbar sind.

14. Analysengerät nach Anspruch 13,
dadurch gekennzeichnet, daß
eine Einrichtung zur Thermostatisierung des Spektrometers (8) sowie der Lichtquelle (1a) und eine Einrichtung zur gesonderten Heizung der Probenküvette (5) Bestandteile des Analysengeräts sind.

## Claims

1. Absorption-spectroscopic analysing apparatus provided with measuring and reference beams for gases or liquids, comprising:
a light source (1a),
means for the pulsed operation of the light source (1a), a sample cuvette (5),
a rod-like photoconductor (21) having a subsequent lens (3) for the collimation of the light beam upon the sample cuvette (5),
a grating spectrometer (8) with inlet gap (7), which comprises a grating monochromator (13) and a photodetector arrangement (14),
a device for focussing the light emerging from the sample cuvette (5) on the inlet gap (7) of the grating spectrometer (8),
characterised in that
the photoconductor (21) is attached directly behind the radiation source (1a) by its inlet face without any preconnected, image-forming optics, and the photodetector arrangement comprises a detector line (14), which is connected to an arrangement having rapid electronics for the detection of the measuring beams (11), considerable fluctuations in the intensity of the pulsed light source (1a) being detected by said electronics and eliminated, whilst the quotient is determined from the associated measuring spectra when there are at least two flashes of light following each other rapidly, and the flashes, in which this quotient exceeds an upper threshold with at least one wavelength or falls below a lower threshold, are ignored.

2. Analysing apparatus according to claim 1, characterised in that the light source (1a) has a rod-like light emission such as, for example, the arc (1b) of a xenon flashlight.

3. Analysing apparatus according to claim 2, characterised in that the photoconductor (21) is a solid quartz rod.

4. Analysing apparatus according to claim 3, characterised in that a beam splitter (4) in the beam path after the lens (3) splits-up the collimated beam into a partial beam (11) through the sample cuvette (5) and a second partial beam (11a), the reference beam (11a), and the latter has an interference filter (9) and a lens, focussing on a photoconductor (12), in the beam path.

5. Analysing apparatus according to claim 4, characterised in that a convex lens (6) and thereafter a photoconductor (20) are disposed in the beam path after the sample cuvette (5), the lens (6) focusses the light on the photoconductor inlet, and the photoconductor outlet abuts directly against the inlet gap (7) of the spectrometer (8).

6. Analysing apparatus according to claim 5, characterised in that the longitudinal direction of the arc (1b) and the height (7a) of the inlet gap (7) are rotated through 90° relative to each other.

7. Analysing apparatus according to claim 6, characterised in that the inlet gap (7) and the detector line (14) of the grating spectrometer (8) are displaceably disposed on a circle, the Rowland circle (15), which is adapted to the configuration of the focal line of the grating.

8. Analysing apparatus according to claim 7, characterised in that a prescribed spectral partial beam, the reference beam (11b), of the beam (11) reflected at the grating monochromator (13) falls onto a spectrally provided detector element (14a) from the detector line (14).

9. Analysing apparatus according to claim 8, characterised in that an optical filter (22) is disposed in the beam path between the light source (1a) and the detector line (14), said filter having such a spectral transmission that the spectral emission distribution of the light source (1a) is made even.

10. Analysing apparatus according to claim 9, characterised in that the quartz rod (21) is hermetically sealed by an upper tube, and a protective gas, such as filtered air for example, is situated between the quartz rod (21) and the upper tube, or there is a vacuum.

11. Analysing apparatus according to claim 10, characterised in that the means for supplying and discharging the protective gas are disposed in such a manner that the individual intermediate spaces are successively traversed with respect to time by flooding, whereby the intermediate space lying furthest away from the light source (1a) is initially rinsed, and the intermediate space lying nearest the light source (1a) is rinsed last.

12. Analysing apparatus according to claim 11, characterised in that
- the inlet gap (7), the concave reflection grating (13) and the detector line (14) are each permanently secured on a respective component part (16, 17, 18),
- the component parts (16, 17, 18) themselves are permanently secured on a planar plate after they have been previously advanced towards an adjusting member (19) and then adjusted in the definitive position.

13. Analysing apparatus according to claim 12, characterised in that a holder of constant length is provided, in which holder sample cuvettes (5) of variable length are interchangeably insertable.

14. Analysing apparatus according to claim 13, characterised in that an arrangement for thermostatically controlling the spectrometer (8) and the light source (1a) and an arrangement for the separate heating of the sample cuvette (5) are components of the analysing apparatus.

## Revendications

1. Appareil d'analyse spectroscopique par absorption, avec des faisceaux de mesure et de référence, pour des gaz et des liquides comprenant :
- une source lumineuse (1a),
- des moyens pour assurer un fonctionnement impulsionnel de la source lumineuse (1a),
- une cuvette à échantillon (5),
- un conducteur de lumière (21) en forme de tige, suivi d'une lentille (3) pour collimater le faisceau lumineux sur la cuvette à échantillon (5),
- un spectromètre à réseau (8) avec une fente d'entrée (7) comprenant un monochromateur de réseau (13) et une installation de photodétection (14),
- un dispositif pour focaliser la lumière sortant de la cuvette à échantillon (5) sur la fente d'entrée (7) du spectromètre à réseau (8),
caractérisé en ce que
le conducteur de lumière (21) est monté, sans comporter en amont, une optique formant une image avec sa surface d'entrée directement derrière la source de rayonnement (1a), et l'installation de photodétection se compose d'une ligne de détecteurs (14) reliée à une installation équipée d'une électronique rapide pour détecter les rayons de mesure (11), permettant de reconnaître et d'éliminer les fortes fluctuations d'intensité de la source lumineuse impulsionnelle (1a) en ce que l'on forme, pour au moins deux éclairs lumineux successifs, le rapport des spectres de mesure correspondants et l'on ignore les éclairs pour lesquels ce rapport dépasse un seuil haut ou passe en dessous d'un seuil bas pour au moins une longueur d'onde.

2. Appareil selon la revendication 1,
caractérisé en ce que
la source lumineuse (1a) présente une émission lumineuse en forme de tige, comme par exemple l'arc électrique (1a) d'une lampe à éclairs au xénon.

3. Appareil selon la revendication 2,
caractérisé en ce que
le conducteur de lumière (21) est une tige de quartz massive.

4. Appareil selon la revendication 3,
caractérisé en ce qu'
un diviseur de faisceau (4) est placé dans le chemin, en aval de la lentille (3) pour décomposer le faisceau regroupé en un faisceau partiel (11) traversant la cuvette à échantillon (5) et un second faisceau partiel (11a) constituant le faisceau de référence (11a), et applique ce dernier par l'intermédiaire d'un filtre interférentiel (9) et d'une lentille de focalisation (10) sur un photodétecteur (12).

5. Appareil selon la revendication 4,
caractérisé en ce qu'
en aval de la cuvette à échantillon (5) dans le chemin optique, il comporte une lentille convexe (6) suivie d'un conducteur de lumière (20), la lentille (6) focalisant la lumière d'entrée du conducteur et de la sortie du conducteur de lumière directement au niveau de l'intervalle d'entrée du spectromètre (8).

6. Appareil selon la revendication 5,
caractérisé en ce que
la direction longitudinale de l'arc électrique (1b) et la hauteur (7a) de la fente d'entrée (7) sont tournées de 90° l'une par rapport à l'autre.

7. Appareil selon la revendication 6,
caractérisé en ce que
l'intervalle d'entrée (7) et la ligne de détecteurs (14) du spectromètre à réseau (9) sont montés coulissants sur un cercle, à savoir le cercle de Rowland (15), qui s'adapte à la forme de la ligne focale du réseau.

8. Appareil selon la revendication 7,
caractérisé en ce qu'
un faisceau partiel spectral prédéterminé, le faisceau de référence (11b) du faisceau (11) réfléchi sur le monochromateur à réseau (13) tombe sur un élément de détection spectral prévu (14a) de la ligne de détecteurs (14).

9. Appareil selon la revendication 8,
caractérisé en ce que
dans le chemin entre la source lumineuse (1a) et la ligne de détecteurs (14), on a un filtre optique (22) ayant une transmission spectrale qui aplanit la distribution spectrale d'émission de la source lumineuse (1a).

10. Appareil selon la revendication 9,
caractérisé en ce que
la tige de quartz (21) est entourée hermétiquement par un tube et entre la tige de quartz (21) et le tube enveloppe, il y a un gaz protecteur comme par exemple de l'air filtré ou du vide.

11. Appareil selon la revendication 10,
caractérisé en ce que
l'alimentation et l'évacuation de gaz protecteur sont telles que les différents intervalles sont successivement balayés et l'intervalle qui est le plus éloigné de la source lumineuse (1a) est balayé d'abord, celui le plus proche de la source lumineuse (1a) étant balayé en dernier lieu.

12. Appareil selon la revendication 11,
caractérisé en ce que
- l'intervalle d'entrée (7), le réseau de réflexion concave (13) et le détecteur (14) sont fixés de manière permanente sur des pièces (16, 17, 18),
- les pièces (16, 17, 18) sont elles-mêmes fixées de manière permanente sur une plaque plane après qu'elles aient été préalablement mises sur un élément d'ajustage (19) puis qu'elles aient été ajustées de manière définitive.

13. Appareil selon la revendication 12,
caractérisé en ce qu'
il comporte un support de longueur constante qui reçoit de manière échangeable des cuvettes d'échantillon (5) de longueurs différentes.

14. Appareil selon la revendication 13,
caractérisé en ce qu'
une installation de réglage de température du spectromètre (8) et de la source lumineuse (1a) ainsi qu'une installation de chauffage séparé de la cuvette à échantillon (5) font partie de l'appareil d'analyse.
